# EUROPEAN PATENT SPECIFICATION

(11) **EP 3 297 316 B1**
(45) Date of publication and mention of the grant of the patent: **03.03.2021**
(21) Application number: 15899255.2
(22) Date of filing: 29.07.2015
(51) Int. Cl.: H04W 72/12, H04W 16/14, H04W 74/08

(54) **UPLINK TRANSMISSION METHOD AND RELATED DEVICE**
VERFAHREN ZUR UPLINK-ÜBERTRAGUNG UND ZUGEHÖRIGE VORRICHTUNG
PROCÉDÉ DE TRANSMISSION EN LIAISON MONTANTE ET DISPOSITIF ASSOCIÉ

(43) Date of publication of application: 21.03.2018
(73) Proprietor: Huawei Technologies Co., Ltd., Longgang District Shenzhen, Guangdong 518129 (CN)
(72) Inventor: LI, Xiaocui, Shenzhen Guangdong 518129 (CN); XU, Kai, Shenzhen Guangdong 518129 (CN)
(74) Representative: Körber, Martin Hans
(86) International application number: PCT/CN2015/085450
(87) International publication number: WO 2017/015903

(56) References cited:
- CN-A- 101 197 769
- CN-A- 102 090 011
- CN-A- 104 507 108
- CN-A- 104 796 920
- US-A1- 2015 181 601
- HUAWEI ET AL: "Frame structure for LAA DL and UL transmission operation", 3GPP DRAFT; R1-152470, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050970908, Retrieved from the Internet: URL:http://www.3gpp.org/ftp/Meetings_3GPP_ SYNC/RAN1/Docs/ [retrieved on 2015-05-24]
- MOTOROLA MOBILITY: "DL Transmission options for LAA-LTE", 3GPP DRAFT; R1-153184_DL_OPTIONS_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Belgrade, Serbia; 20150525 - 20150529 16 May 2015 (2015-05-16), XP050973317, Retrieved from the Internet: URL:http://www.3gpp.org/ftp/tsg_ran/WG1_RL 1/TSGR1_81/Docs/ [retrieved on 2015-05-16]
- MCC SUPPORT: "Draft Report of 3GPP TSG RAN WG1 #81 v0.2.0 (Fukuoka, Japan, 25th - 29th May 2", 3GPP DRAFT; DRAFT_MINUTES_REPORT_RAN1#81_V020, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 12 June 2015 (2015-06-12), XP050984978, Retrieved from the Internet: URL:http://www.3gpp.org/ftp/tsg_ran/WG1_RL 1/TSGR1_81/Report/ [retrieved on 2015-06-12]
- ETRI: "Discussion on the UL LBT for LAA", 3GPP DRAFT; R1-153001-DISCUSSION ON THE UL LBT FOR LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050973612, Retrieved from the Internet: URL:http://www.3gpp.org/ftp/Meetings_3GPP_ SYNC/RAN1/Docs/ [retrieved on 2015-05-24]
- INTEL CORPORATION: "Uplink transmission for LAA", 3GPP DRAFT; R2-152214_LAA_UP_LBT_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20150525 - 20150529 24 May 2015 (2015-05-24), XP050973839, Retrieved from the Internet: URL:http://www.3gpp.org/ftp/Meetings_3GPP_ SYNC/RAN2/Docs/ [retrieved on 2015-05-24]
- ERICSSON ET AL: "WF on contention for LAA UL transmission", 3GPP DRAFT; R1-153537, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 26 May 2015 (2015-05-26), XP050978476, Retrieved from the Internet: URL:http://www.3gpp.org/ftp/Meetings_3GPP_ SYNC/RAN1/Docs/ [retrieved on 2015-05-26]
- IEEE: "IEEE Standard for Information technology-Telecommunications and information exchange between systems-Local and metropolitan area networks-Speicfic requirements Part 11: wireless Lan Medium Access Control (MAC) and Phsical Layer (PHY) Specifications Amendment 5: Enhancements for higher Throughput", IEEE STD 802.11NTM-, IEEE, US, 29 October 2009 (2009-10-29), pages 1-536, XP007919661,

## Description

### TECHNICAL FIELD

The present invention relates to the wireless communications field, and in particular, to an uplink transmission method and a related device.

### BACKGROUND

Spectrums used in a wireless communications system are classified into a licensed spectrum (licensed spectrum) and an unlicensed spectrum (unlicensed spectrum). For a commercial wireless communications system, an operator needs to obtain the licensed spectrum at an auction. After obtaining a license, the operator may carry out a wireless communications operation activity by using the corresponding spectrum. The unlicensed spectrum does not need to be auctioned, and anyone can legitimately use these frequency bands, for example, Wireless Fidelity (Wireless Fidelity, WiFi for short) devices on 2.4 GHz and 5 GHz frequency bands. Generally, a carrier on the licensed spectrum is referred to as a licensed carrier, and a carrier on the unlicensed spectrum is referred to as an unlicensed carrier. With development of wireless communications technologies, there is an increasing amount of information transmitted in a wireless communications network. Preempting an unlicensed spectrum to transmit information can improve a data throughput in the wireless communications network, and better meet a user requirement.

In a licensed-assisted access using Long Term Evolution (licensed-assisted access using Long Term Evolution, LAA-LTE for short) system, an LAA-LTE node uses a channel resource by using a listen before talk (listen before talk, LBT for short) rule. LBT is a carrier sense multiple access (Carrier Sense Multiple Access, CSMA for short) technology.

Current uplink transmission technologies related to LAA-LTE in the 3^{rd} Generation Partnership Project (3^{rd} Generation Partnership Project, 3GPP for short) fall into two types. One type is as follows: An evolved NodeB (evolved NodeB, eNB for short) preempts a channel by using LBT; if the evolved NodeB successfully preempts the channel, sends uplink (Uplink, UL for short) grant (grant) information to user equipment (User Equipment, UE for short); and sends some padding information to occupy the channel, until the UE performs uplink transmission. The other type is as follows: After receiving a UL grant, UE preempts a channel by using LBT; and if the channel is idle, and the UE successfully preempts the channel, sends corresponding data according to scheduling by an eNB; or abandons this transmission if the UE fails to preempt the channel.

However, for a solution in which the UE preempts the channel by using the LBT, there is the following disadvantage:
When a UL grant is transmitted in a downlink, uplink transmission cannot be performed in a timely manner if the UE fails to preempt the channel, causing an uplink transmission delay and signaling waste.

In 3GPP TSG RAN WG1 Meeting #82, Beijing China, 24th - 28th August 2015, contribution R1-153565 proposes in addition to UL LBT that the eNB indicates to the UE not to perform LBT before transmission when the UL transmission burst occurs within X microseconds after the DL transmission burst from that eNB on the same carrier. In the same meeting, contribution R1-153537 presents proposals for the fair coexistence between LAA and other technologies.

### SUMMARY

Embodiments of the present invention provide an uplink transmission method and a related device, so as to at least resolve a prior-art problem that, in a solution in which UE preempts a channel by using LBT, when a UL grant is transmitted in a downlink, uplink transmission cannot be performed in a timely manner if the UE fails to preempt the channel, causing an uplink transmission delay and signaling waste.

To achieve the foregoing objective, the following technical solutions are used in the embodiments of the present invention:
According to a first aspect, an uplink transmission method is provided, and the method includes:
obtaining, by user equipment UE, uplink transmission duration of uplink data that is to be sent by the UE;
obtaining, by the UE, downlink transmission duration of downlink data transmitted by a base station on an unlicensed carrier; and
sending, by the UE, the uplink data on the unlicensed carrier after transmission of the downlink data ends, if it determines that a sum of the uplink transmission duration and the downlink transmission duration is not greater than maximum channel occupation duration, which is a maximum duration in which a single device continuously occupies a channel;
wherein after the obtaining, by UE, uplink transmission duration of uplink data that is to be sent by the UE, and the obtaining, by the UE, downlink transmission duration of downlink data transmitted by a base station on an unlicensed carrier, the method further includes:
   sending, by the UE, partial data in the uplink data on the unlicensed carrier after the transmission of the downlink data ends, where a sum of uplink transmission duration of the partial data and the downlink transmission duration is not greater than the maximum channel occupation duration, if it determines that the sum of the uplink transmission duration and the downlink transmission duration is greater than the maximum channel occupation duration.

With reference to the first aspect, in a first possible implementation of the first aspect, the obtaining, by the UE, downlink transmission duration of downlink data transmitted by a base station on an unlicensed carrier includes:
receiving, by the UE, the downlink transmission duration sent by the base station.

With reference to the first possible implementation of the first aspect, in a second possible implementation of the first aspect, the downlink transmission duration is sent by the base station to the UE by using a physical downlink control channel PDCCH on an unlicensed carrier; or
the downlink transmission duration is sent by the base station to the UE by using a PDCCH on a licensed carrier.

With reference to the first aspect, in a third possible implementation of the first aspect, the obtaining, by the UE, downlink transmission duration of downlink data transmitted by a base station on an unlicensed carrier includes:
receiving, by the UE, end location information that is of the downlink data and sent by the base station;
obtaining, by the UE, start location information of the downlink data; and
determining, by the UE, the downlink transmission duration according to the start location information and the end location information.

With reference to the third possible implementation of the first aspect, in a fourth possible implementation of the first aspect, the end location information is sent by the base station to the UE by using a physical downlink control channel PDCCH on an unlicensed carrier; or
the end location information is sent by the base station to the UE by using a PDCCH on a licensed carrier.

According to a second aspect, user equipment UE is provided, and the UE includes an obtaining unit and a sending unit, where
the obtaining unit is configured to: obtain uplink transmission duration of uplink data that is to be sent by the UE, and obtain downlink transmission duration of downlink data transmitted by a base station on an unlicensed carrier; and
the sending unit is configured to: send the uplink data on the unlicensed carrier after transmission of the downlink data ends, if it determines that a sum of the uplink transmission duration and the downlink transmission duration is not greater than maximum channel occupation duration, which is a maximum duration in which a single device continuously occupies a channel;
wherein the sending unit is further configured to: after the obtaining unit obtains the uplink transmission duration of the uplink data that is to be sent by the UE, and obtains the downlink transmission duration of the downlink data transmitted by the base station on the unlicensed carrier, send partial data in the uplink data on the unlicensed carrier after the transmission of the downlink data ends, where a sum of uplink transmission duration of the partial data and the downlink transmission duration is not greater than the maximum channel occupation duration, if it determines that the sum of the uplink transmission duration and the downlink transmission duration is greater than the maximum channel occupation duration.

With reference to the second aspect, in a first possible implementation of the second aspect, the obtaining unit is specifically configured to:
receive the downlink transmission duration sent by the base station.

With reference to the first possible implementation of the second aspect, in a second possible implementation of the second aspect, the downlink transmission duration is sent by the base station to the UE by using a physical downlink control channel PDCCH on an unlicensed carrier; or
the downlink transmission duration is sent by the base station to the UE by using a PDCCH on a licensed carrier.

With reference to the second aspect, in a third possible implementation of the second aspect, the obtaining unit is specifically configured to:
receive end location information that is of the downlink data and sent by the base station;
obtain start location information of the downlink data; and
determine the downlink transmission duration according to the start location information and the end location information.

With reference to the third possible implementation of the second aspect, in a fourth possible implementation of the second aspect, the end location information is sent by the base station to the UE by using a physical downlink control channel PDCCH on an unlicensed carrier; or
the end location information is sent by the base station to the UE by using a PDCCH on a licensed carrier.

According to a first example, which is not according to the invention and is present for illustration purposes only, user equipment UE is provided, and the UE includes a processor and a transmitter, where
the processor is configured to: obtain uplink transmission duration of uplink data that is to be sent by the UE, and obtain downlink transmission duration of downlink data transmitted by a base station on an unlicensed carrier; and
the transmitter is configured to: if a sum of the uplink transmission duration and the downlink transmission duration is not greater than maximum channel occupation duration of occupying the unlicensed carrier each time, send the uplink data on the unlicensed carrier after transmission of the downlink data ends.

With reference to the first example, in a first possible implementation of the first example, the transmitter is further configured to: after the processor obtains the uplink transmission duration of the uplink data that is to be sent by the UE, and obtains the downlink transmission duration of the downlink data transmitted by the base station on the unlicensed carrier, if the sum of the uplink transmission duration and the downlink transmission duration is greater than the maximum channel occupation duration of occupying the unlicensed carrier each time, send partial data in the uplink data on the unlicensed carrier after the transmission of the downlink data ends, where a sum of uplink transmission duration of the partial data and the downlink transmission duration is not greater than the maximum channel occupation duration.

With reference to the first example or the first possible implementation of the first example, in a second possible implementation of the third aspect, the UE further includes a receiver, and
the processor is specifically configured to:
receive, by using the receiver, the downlink transmission duration sent by the base station.

With reference to the second possible implementation of the first example, in a third possible implementation of the first example, the downlink transmission duration is sent by the base station to the UE by using a physical downlink control channel PDCCH on an unlicensed carrier; or
the downlink transmission duration is sent by the base station to the UE by using a PDCCH on a licensed carrier.

With reference to the first example or the first possible implementation of the first example, in a fourth possible implementation of the first example, the UE further includes a receiver, and
the processor is specifically configured to:
receive, by using the receiver, end location information that is of the downlink data and sent by the base station;
obtain start location information of the downlink data; and
determine the downlink transmission duration according to the start location information and the end location information.

With reference to the fourth possible implementation of the first example, in a fifth possible implementation of the first example, the end location information is sent by the base station to the UE by using a physical downlink control channel PDCCH on an unlicensed carrier; or
the end location information is sent by the base station to the UE by using a PDCCH on a licensed carrier.

Based on the uplink transmission method and the UE provided in the embodiments of the present invention, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in the embodiments of the present invention, the UE directly obtains the uplink transmission duration of the uplink data that is to be sent by the UE and the downlink transmission duration of the downlink data transmitted by the base station on the unlicensed carrier. When the sum of the uplink transmission duration and the downlink transmission duration is not greater than the maximum channel occupation duration of occupying the unlicensed carrier each time, the UE sends, after the transmission of the downlink data ends, the uplink data on the unlicensed carrier on which the downlink data is transmitted. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

According to a second example, which is not covered by the claimed invention, an uplink transmission method is provided, and the method includes:
occupying, by a base station, an unlicensed carrier;
determining, by the base station, downlink transmission duration of downlink data transmitted on the unlicensed carrier; and
sending, by the base station, the downlink transmission duration to user equipment UE.

With reference to the second example, in a first possible implementation of the second example, the sending, by the base station, the downlink transmission duration to UE includes:
sending, by the base station, the downlink transmission duration to the UE by using a physical downlink control channel PDCCH on an unlicensed carrier; or
sending, by the base station, the downlink transmission duration to the UE by using a PDCCH on a licensed carrier.

According to a third example, which is not according to the invention and is present for illustration purposes only, a base station is provided, and the base station includes an occupation unit, a determining unit, and a sending unit, where
the occupation unit is configured to occupy an unlicensed carrier;
the determining unit is configured to determine downlink transmission duration of downlink data transmitted on the unlicensed carrier; and
the sending unit is configured to send the downlink transmission duration to user equipment UE.

With reference to a first possible implementation of the fifth aspect, which is not according to the invention and is present for illustration purposes only, the sending unit is specifically configured to:
send the downlink transmission duration to the UE by using a physical downlink control channel PDCCH on an unlicensed carrier; or
the sending unit is specifically configured to:
   send the downlink transmission duration to the UE by using a PDCCH on a licensed carrier.

According to a fourth example, which is not according to the invention and is present for illustration purposes only, a base station is provided, and the base station includes a processor and a transmitter, where
the processor is configured to occupy an unlicensed carrier;
the processor is further configured to determine downlink transmission duration of downlink data transmitted on the unlicensed carrier; and
the transmitter is configured to send the downlink transmission duration to user equipment UE.

With reference to first possible implementation of the sixth aspect, which is not covered by the claimed invention, the transmitter is specifically configured to:
send the downlink transmission duration to the UE by using a physical downlink control channel PDCCH on an unlicensed carrier; or
the transmitter is specifically configured to:
   send the downlink transmission duration to the UE by using a PDCCH on a licensed carrier.

Based on the uplink transmission method and the base station provided in the examples, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in the embodiments of the present invention, after preempting the unlicensed carrier, the base station sends, to the UE, the downlink transmission duration of the downlink data transmitted on the unlicensed carrier, so that the UE obtains the downlink transmission duration.

When a sum of the downlink transmission duration and uplink transmission duration of uplink data that is to be sent by the UE is not greater than maximum channel occupation duration of occupying the unlicensed carrier each time, the UE sends, after transmission of the downlink data ends, the uplink data on the unlicensed carrier on which the downlink data is transmitted. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

According to a fifth example, which is not according to the invention and is present for illustration purposes only, an uplink transmission method is provided, and the method includes:
occupying, by a base station, an unlicensed carrier;
determining, by the base station, an end location of downlink data transmitted on the unlicensed carrier; and
sending, by the base station, end location information of the downlink data to user equipment UE according to the end location.

With reference to the seventh aspect, in a first possible implementation of the seventh aspect, the sending, by the base station, end location information of the downlink data to UE according to the end location includes:
sending, by the base station, the end location information of the downlink data to the UE according to the end location and by using a physical downlink control channel PDCCH on an unlicensed carrier; or
sending, by the base station, the end location information of the downlink data to the UE according to the end location and by using a PDCCH on a licensed carrier.

According to a sixth example, which is not according to the invention and is present for illustration purposes only, a base station is provided, and the base station includes an occupation unit, a determining unit, and a sending unit, where
the occupation unit is configured to occupy an unlicensed carrier;
the determining unit is configured to determine an end location of downlink data transmitted on the unlicensed carrier; and
the sending unit is configured to send end location information of the downlink data to user equipment UE according to the end location.

With reference to a first possible implementation of the eighth aspect, which is not according to the invention and is present for illustration purposes only, the sending unit is specifically configured to:
send the end location information of the downlink data to the UE according to the end location and by using a physical downlink control channel PDCCH on an unlicensed carrier; or
the sending unit is specifically configured to:
   send the end location information of the downlink data to the UE according to the end location and by using a PDCCH on a licensed carrier.

According to a seventh example, which is not according to the invention and is present for illustration purposes only, a base station is provided, and the base station includes a processor and a transmitter, where
the processor is configured to occupy an unlicensed carrier;
the processor is further configured to determine an end location of downlink data transmitted on the unlicensed carrier; and
the transmitter is configured to send end location information of the downlink data to user equipment UE according to the end location.

With reference to first possible implementation of the ninth aspect, which is not according to the invention and is present for illustration purposes only, the transmitter is specifically configured to:
send the end location information of the downlink data to the UE according to the end location and by using a physical downlink control channel PDCCH on an unlicensed carrier; or
the transmitter is specifically configured to:
   send the end location information of the downlink data to the UE according to the end location and by using a PDCCH on a licensed carrier.

Based on the uplink transmission method and the base station provided in the examples, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in the embodiments of the present invention, after preempting the unlicensed carrier, the base station sends, to the UE, the end location information of the downlink data transmitted on the unlicensed carrier, so that the UE obtains downlink transmission duration according to the end location information and start location information that are of the downlink data. When a sum of the downlink transmission duration and uplink transmission duration of uplink data that is to be sent by the UE is not greater than maximum channel occupation duration of occupying the unlicensed carrier each time, the UE sends, after transmission of the downlink data ends, the uplink data on the unlicensed carrier on which the downlink data is transmitted. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a first schematic flowchart of an uplink transmission method according to an embodiment of the present invention;
FIG. 2 is an uplink transmission mode used when a sum of uplink transmission duration and downlink transmission duration is less than maximum channel occupation duration according to an embodiment of the present invention;
FIG. 3 is an uplink transmission mode used when a sum of uplink transmission duration and downlink transmission duration is equal to maximum channel occupation duration according to an embodiment of the present invention;
FIG. 4 is a second schematic flowchart of an uplink transmission method according to an embodiment of the present invention;
FIG. 5 is an uplink transmission mode used when a sum of uplink transmission duration and downlink transmission duration is greater than maximum channel occupation duration according to an embodiment of the present invention;
FIG. 6 is a third schematic flowchart of an uplink transmission method according to an example;
FIG. 7 is a fourth schematic flowchart of an uplink transmission method according to an example;
FIG. 8 (a) is a first schematic interaction diagram of an uplink transmission method according to an embodiment of the present invention;
FIG. 8 (b) is a second schematic interaction diagram of an uplink transmission method according to an embodiment of the present invention;
FIG. 9 (a) is a third schematic interaction diagram of an uplink transmission method according to an embodiment of the present invention;
FIG. 9 (b) is a fourth schematic interaction diagram of an uplink transmission method according to an embodiment of the present invention;
FIG. 10 is a first schematic structural diagram of UE according to an example;
FIG. 11 is a first schematic structural diagram of a base station according to an example;
FIG. 12 is a second schematic structural diagram of UE according to an embodiment of the present invention;
FIG. 13 is a third schematic structural diagram of UE according to an embodiment of the present invention; and
FIG. 14 is a second schematic structural diagram of a base station according to an example.

### DESCRIPTION OF EMBODIMENTS

The following describes the technical solutions in the embodiments of the present invention with reference to the accompanying drawings in the embodiments of the present invention. Apparently, the described embodiments are merely some rather than all of the embodiments of the present invention. In the following description, for a purpose of description instead of limitation, some specific details are set forth to make a clear understanding. In some embodiments, detailed descriptions of well-known apparatuses, circuits, and methods are omitted, so that this application is described without being obscured by unnecessary details. In the entire description, same reference numbers and same names indicate same or similar elements.

### Embodiment 1

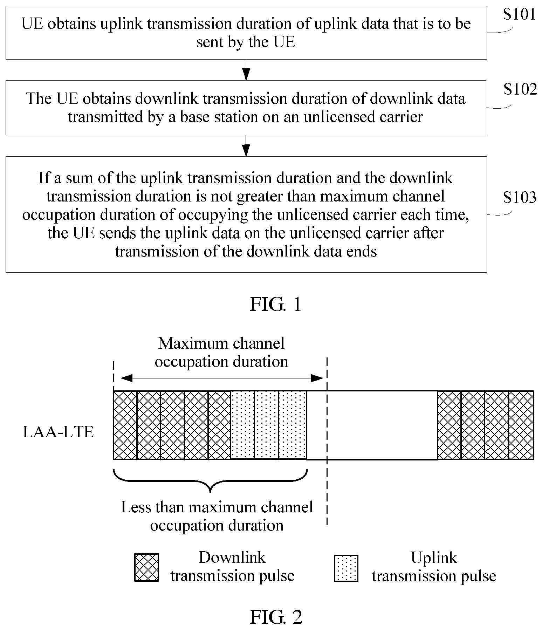

This embodiment of the present invention provides an uplink transmission method. FIG. 1 shows some steps of said method:
S101. UE obtains uplink transmission duration of uplink data that is to be sent by the UE.

Specifically, in this embodiment of the present invention, the UE may obtain, by using system configuration information or the Radio Resource Control (Radio Resource Control, RRC for short) protocol, the uplink transmission duration of the uplink data that is to be sent by the UE.

This is not specifically limited in this embodiment of the present invention.

S102. The UE obtains downlink transmission duration of downlink data transmitted by a base station on an unlicensed carrier.

Specifically, as described in the background, a carrier on a licensed spectrum is referred to as a licensed carrier, and a carrier on an unlicensed spectrum is referred to as an unlicensed carrier.

In this embodiment of the present invention, in a possible implementation, that the UE obtains downlink transmission duration of downlink data transmitted by a base station on an unlicensed carrier may specifically include:
receiving, by the UE, the downlink transmission duration sent by the base station.

The downlink transmission duration may be sent by the base station to the UE by using a physical downlink control channel (Physical Downlink Control Channel, PDCCH for short) on an unlicensed carrier.

Alternatively, the downlink transmission duration may be sent by the base station to the UE by using a PDCCH on a licensed carrier.

A manner of transmitting the downlink transmission duration is not specifically limited in this embodiment of the present invention.

It should be noted that a new bit is usually added to a downlink control information (Downlink Control Information, DCI for short) field of the PDCCH on the licensed carrier or the unlicensed carrier to indicate the downlink transmission duration. The downlink transmission duration is certainly less than maximum channel occupation duration of occupying the unlicensed carrier each time. However, maximum channel occupation duration that is of occupying an unlicensed carrier each time and allowed in different countries and regions is different. In addition, when different channel access manners are used, the allowed maximum channel occupation duration of occupying an unlicensed carrier each time is also different. For example, a European regulation of the European Telecommunications Standards Institute (European Telecommunications Standards Institute, ETSI for short) stipulates that, when a frame based equipment (Frame based equipment, FBE for short) mode is used or an option A (option A) in load based equipment (load based equipment, LBE for short) is used, maximum channel occupation duration in which a network device occupies an unlicensed carrier each time is less than 10 ms. When an option B (option B) in the LBE is used, maximum channel occupation duration in which a network device occupies an unlicensed carrier each time is less than 13 ms. In Japan, a related regulation stipulates that, maximum channel occupation duration in which a network device occupies an unlicensed carrier each time needs to be less than 4 ms. Therefore, in this embodiment of the present invention, for different standards of maximum channel occupation duration of occupying an unlicensed carrier each time, a quantity of newly added bits may be selectively less than or equal to 4.

The maximum channel occupation duration is maximum duration in which a single device continuously occupies a channel. The single device may be specifically UE, a base station, a Wireless Fidelity (Wireless Fidelity, WiFi for short) access point (Access Point, AP for short), or the like. This is not specifically limited in this embodiment of the present invention.

In another possible implementation, that the UE obtains downlink transmission duration of downlink data transmitted by a base station on an unlicensed carrier may specifically include:
receiving, by the UE, end location information that is of the downlink data and sent by the base station;
obtaining, by the UE, start location information of the downlink data; and
determining, by the UE, the downlink transmission duration according to the start location information and the end location information.

That is, in this implementation, the downlink transmission duration is obtained by performing calculation on an end location and a start location that are of the downlink data.

The start location information is obtained in many manners. For example, the start location information may be obtained by using a method for detecting a preamble (preamble) signal, start location information of a subframe may be indicated by using a PDCCH in a next subframe, and so on. The manner of obtaining the start location information is not specifically limited in this embodiment of the present invention.

The end location information may be sent by the base station to the UE by using a PDCCH on an unlicensed carrier.

Alternatively, the end location information is sent by the base station to the UE by using a PDCCH on a licensed carrier.

A manner of transmitting the end location information is not specifically limited in this embodiment of the present invention.

It should be noted that one bit is usually added to a DCI field of the PDCCH on the licensed carrier or the unlicensed carrier to indicate the end location. For example, the bit may be set to 0 to represent that no data is to be transmitted subsequently, and the bit may be set to 1 to represent that there is data to be transmitted subsequently. Certainly, alternatively, the bit may be set to 1 to represent that no data is to be transmitted subsequently, and the bit may be set to 0 to represent that there is data to be transmitted subsequently. This is not specifically limited in this embodiment of the present invention.

S103. If a sum of the uplink transmission duration and the downlink transmission duration is not greater than maximum channel occupation duration of occupying the unlicensed carrier each time, the UE sends the uplink data on the unlicensed carrier after transmission of the downlink data ends.

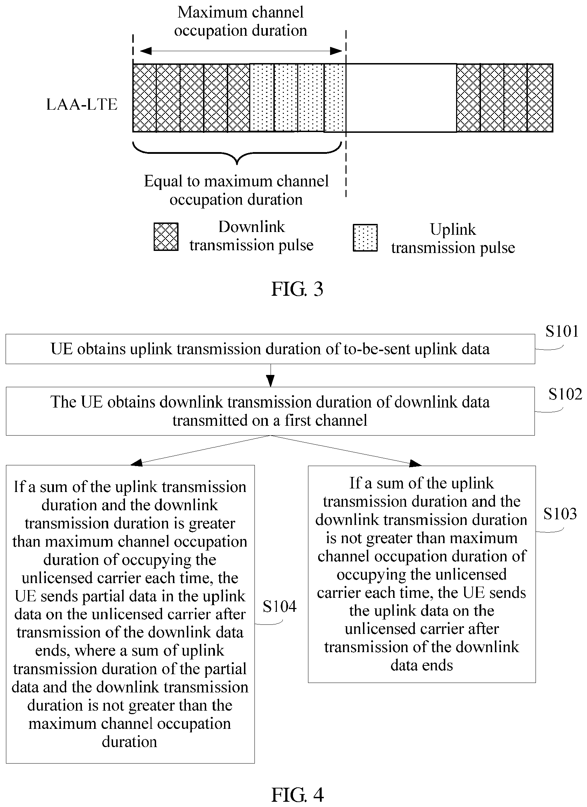

For example, as shown in FIG. 2, FIG. 2 is an uplink transmission mode used when the sum of the uplink transmission duration and the downlink transmission duration is less than the maximum channel occupation duration of occupying the unlicensed carrier each time. As shown in FIG. 3, FIG. 3 is an uplink transmission mode used when the sum of the uplink transmission duration and the downlink transmission duration is equal to the maximum channel occupation duration of occupying the unlicensed carrier each time. It can be learned that, when the sum of the uplink transmission duration and the downlink transmission duration is not greater than the maximum channel occupation duration of occupying the unlicensed carrier each time, the UE sends the uplink data on the unlicensed carrier after the transmission of the downlink data ends.

It should be noted that in this embodiment of the present invention, there is no necessary execution sequence between step S101 and step S102. Step S101 may be performed before step S102; step S102 may be performed before step S101; or step S101 and step S102 may be concurrently performed. This is not specifically limited in this embodiment of the present invention.

Based on the uplink transmission method provided in this embodiment of the present invention, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in this embodiment of the present invention, the UE directly obtains the uplink transmission duration of the uplink data that is to be sent by the UE and the downlink transmission duration of the downlink data transmitted by the base station on the unlicensed carrier. When the sum of the uplink transmission duration and the downlink transmission duration is not greater than the maximum channel occupation duration of occupying the unlicensed carrier each time, the UE sends, after the transmission of the downlink data ends, the uplink data on the unlicensed carrier on which the downlink data is transmitted. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

Further, as shown in FIG. 4, in this embodiment of the present invention, after the UE obtains the uplink transmission duration of the uplink data that is to be sent by the UE (step S101), and the UE obtains the downlink transmission duration of the downlink data transmitted by the base station on the unlicensed carrier (step S 102), the method includes the following step:
S104. If a sum of the uplink transmission duration and the downlink transmission duration is greater than maximum channel occupation duration of occupying the unlicensed carrier each time, the UE sends partial data in the uplink data on the unlicensed carrier after transmission of the downlink data ends, where a sum of uplink transmission duration of the partial data and the downlink transmission duration is not greater than the maximum channel occupation duration.

Specifically, the partial data in the uplink data is data obtained by performing a truncation operation on the uplink data. Specifically, the truncation operation may be intercepting front-section partial data in the uplink data, may be intercepting rear-section partial data in the uplink data, or may be intercepting any partial data in the uplink data. This is not specifically limited in this embodiment of the present invention.

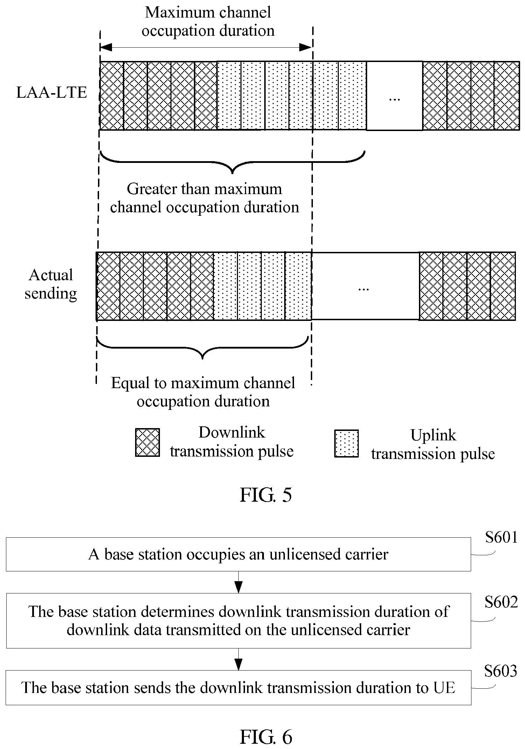

For example, as shown in FIG. 5, FIG. 5 is an uplink transmission mode used when the sum of the uplink transmission duration and the downlink transmission duration is greater than the maximum channel occupation duration of occupying the unlicensed carrier each time. It can be learned that, when the sum of the uplink transmission duration and the downlink transmission duration is greater than the maximum channel occupation duration of occupying the unlicensed carrier each time, the UE sends the partial data in the uplink data on the unlicensed carrier after the transmission of the downlink data ends.

It should be noted that in the uplink transmission mode shown in FIG. 5, the sum of the uplink transmission duration of the partial data in the uplink data and the downlink transmission duration is equal to the maximum channel occupation duration. Certainly, alternatively, the sum of the uplink transmission duration of the partial data in the uplink data and the downlink transmission duration may be less than the maximum channel occupation duration. This is not specifically limited in this embodiment of the present invention.

Based on the uplink transmission method provided in this embodiment of the present invention, when the sum of the uplink transmission duration of the uplink data that is to be sent by the UE and the downlink transmission duration of the downlink data transmitted by the base station on the unlicensed carrier is greater than the maximum channel occupation duration of occupying the unlicensed carrier each time, the UE sends, after the transmission of the downlink data ends, the partial data in the uplink data on the unlicensed carrier on which the downlink data is transmitted. The sum of the uplink transmission duration of the partial data and the downlink transmission duration is not greater than the maximum channel occupation duration. That is, the partial data in the uplink data may be transmitted when the sum of the uplink transmission duration of the uplink data that is to be sent by the UE and the downlink transmission duration of the downlink data transmitted by the base station on the unlicensed carrier is greater than the maximum channel occupation duration of occupying the unlicensed carrier each time. Therefore, a problem that, in a solution in which UE preempts a channel by using LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

### Example 1 (not according to the invention and present for illustration purposes only)

This example provides an uplink transmission method. As shown in FIG. 6, the method includes the following steps.

S601. A base station occupies an unlicensed carrier.

Specifically, in this example, the base station may preempt a channel resource in an LBT manner. This is not specifically limited in this example.

The channel resource herein specifically indicates the unlicensed carrier.

S602. The base station determines downlink transmission duration of downlink data transmitted on the unlicensed carrier.

S603. The base station sends the downlink transmission duration to UE.

That the base station sends the downlink transmission duration to UE may specifically include:
sending, by the base station, the downlink transmission duration to the UE by using a PDCCH on an unlicensed carrier; or
sending, by the base station, the downlink transmission duration to the UE by using a PDCCH on a licensed carrier.

A manner of transmitting the downlink transmission duration is not specifically limited in this example.

It should be noted that a new bit is usually added to a DCI field of the PDCCH on the licensed carrier or the unlicensed carrier to indicate the downlink transmission duration. The downlink transmission duration is certainly less than maximum channel occupation duration of occupying the unlicensed carrier each time. However, maximum channel occupation duration that is of occupying an unlicensed carrier each time and allowed in different countries and regions is different. In addition, when different channel access manners are used, the allowed maximum channel occupation duration of occupying an unlicensed carrier each time is also different. For example, the ETSI stipulates that, when an FBE mode is used or an option A in LBE is used, maximum channel occupation duration in which a network device occupies an unlicensed carrier each time is less than 10 ms. When an option B in the LBE is used, maximum channel occupation duration in which a network device occupies an unlicensed carrier each time is less than 13 ms. In Japan, a related regulation stipulates that, maximum channel occupation duration in which a network device occupies an unlicensed carrier each time needs to be less than 4 ms. Therefore, in this example, for different standards of maximum channel occupation duration of occupying an unlicensed carrier each time, a quantity of newly added bits may be selectively less than or equal to 4.

Based on the uplink transmission method provided in this example, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in this example, after preempting the unlicensed carrier, the base station sends, to the UE, the downlink transmission duration of the downlink data transmitted on the unlicensed carrier, so that the UE obtains the downlink transmission duration. When a sum of the downlink transmission duration and uplink transmission duration of uplink data that is to be sent by the UE is not greater than the maximum channel occupation duration of occupying the unlicensed carrier each time, the UE sends, after transmission of the downlink data ends, the uplink data on the unlicensed carrier on which the downlink data is transmitted. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

### Example 2 (not according to the invention and present for illustration purposes only)

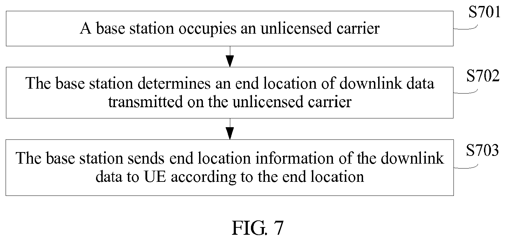

This example provides an uplink transmission method. As shown in FIG. 7, the method includes the following steps.

S701. A base station occupies an unlicensed carrier.

Specifically, in this example, the base station may preempt a channel resource in an LBT manner. This is not specifically limited in this example.

The channel resource herein specifically indicates the unlicensed carrier.

S702. The base station determines an end location of downlink data transmitted on the unlicensed carrier.

S703. The base station sends end location information of the downlink data to UE according to the end location.

That the base station sends end location information of the downlink data to UE according to the end location may specifically include:
sending, by the base station, the end location information of the downlink data to the UE according to the end location and by using a PDCCH on an unlicensed carrier; or
sending, by the base station, the end location information of the downlink data to the UE according to the end location and by using a PDCCH on a licensed carrier.

A manner of transmitting the end location information is not specifically limited in this example.

It should be noted that one bit is usually added to a DCI field of the PDCCH on the licensed carrier or the unlicensed carrier to indicate the end location. For example, the bit may be set to 0 to represent that no data is to be transmitted subsequently, and the bit may be set to 1 to represent that there is data to be transmitted subsequently. Certainly, alternatively, the bit may be set to 1 to represent that no data is to be transmitted subsequently, and the bit may be set to 0 to represent that there is data to be transmitted subsequently. This is not specifically limited in this example. Based on the uplink transmission method provided in this example, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in this example, after preempting the unlicensed carrier, the base station sends, to the UE, the end location information of the downlink data transmitted on the unlicensed carrier, so that the UE obtains downlink transmission duration according to the end location information and start location information that are of the downlink data. When a sum of the downlink transmission duration and uplink transmission duration of uplink data that is to be sent by the UE is not greater than maximum channel occupation duration of occupying the unlicensed carrier each time, the UE sends, after transmission of the downlink data ends, the uplink data on the unlicensed carrier on which the downlink data is transmitted. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

### Embodiment 2 (not according to the invention and present for illustration purposes only)

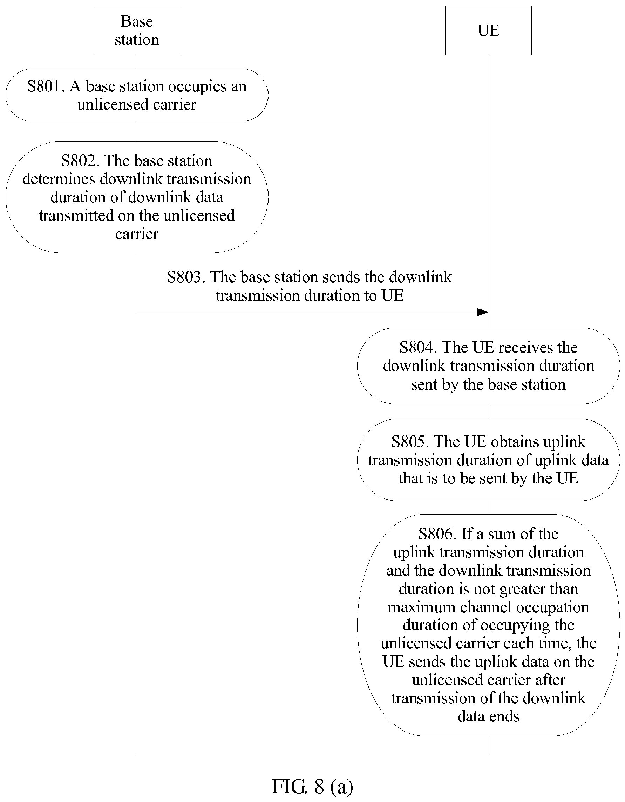

This embodiment of the present invention provides an uplink transmission method. Specifically, description is provided by using an example of interaction between UE and a base station. As shown in FIG. 8 (a), the method includes the following steps:
S801. A base station occupies an unlicensed carrier.
S802. The base station determines downlink transmission duration of downlink data transmitted on the unlicensed carrier.
S803. The base station sends the downlink transmission duration to UE.
S804. The UE receives the downlink transmission duration sent by the base station.
S805. The UE obtains uplink transmission duration of uplink data that is to be sent by the UE.
S806. If a sum of the uplink transmission duration and the downlink transmission duration is not greater than maximum channel occupation duration of occupying the unlicensed carrier each time, the UE sends the uplink data on the unlicensed carrier after transmission of the downlink data ends.

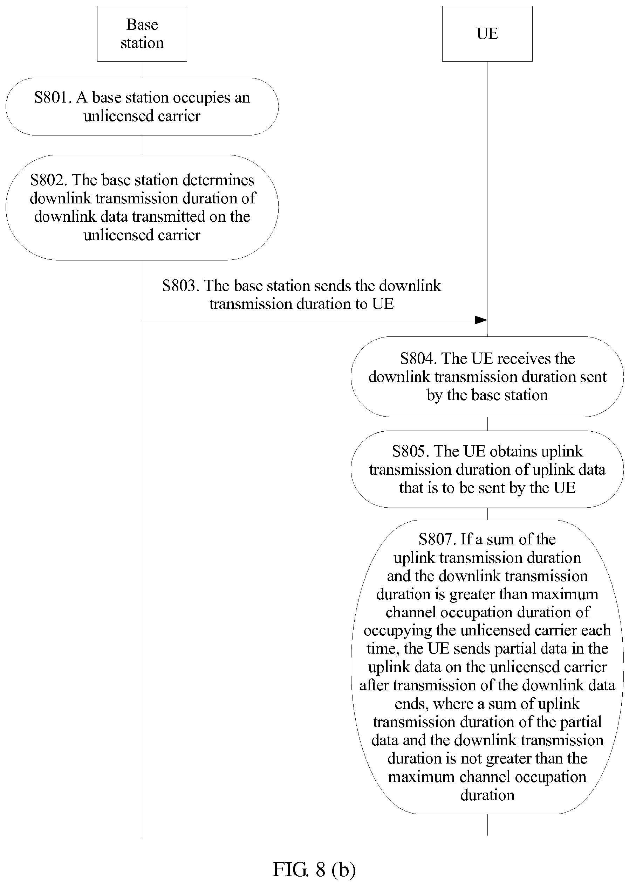

Optionally, as shown in FIG. 8 (b), after step S804 and step S805, the method may further include the following step:
S807. If a sum of the uplink transmission duration and the downlink transmission duration is greater than maximum channel occupation duration of occupying the unlicensed carrier each time, the UE sends partial data in the uplink data on the unlicensed carrier after transmission of the downlink data ends, where a sum of uplink transmission duration of the partial data and the downlink transmission duration is not greater than the maximum channel occupation duration.

Specifically, in this embodiment of the present invention, for explanation of related nouns and specific implementation of related steps, refer to the foregoing method embodiments. Details are not described herein again in this embodiment of the present invention.

Based on the uplink transmission method provided in this embodiment of the present invention, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in this embodiment of the present invention, after preempting the unlicensed carrier, the base station sends, to the UE, the downlink transmission duration of the downlink data transmitted on the unlicensed carrier, so that the UE obtains the downlink transmission duration. When the sum of the downlink transmission duration and the uplink transmission duration of the uplink data that is to be sent by the UE is not greater than the maximum channel occupation duration of occupying the unlicensed carrier each time, the UE sends, after the transmission of the downlink data ends, the uplink data on the unlicensed carrier on which the downlink data is transmitted. When the sum of the downlink transmission duration and the uplink transmission duration of the uplink data that is to be sent by the UE is greater than the maximum channel occupation duration of occupying the unlicensed carrier each time, the UE sends, after the transmission of the downlink data ends, the partial data in the uplink data on the unlicensed carrier on which the downlink data is transmitted. The sum of the uplink transmission duration of the partial data and the downlink transmission duration is not greater than the maximum channel occupation duration. That is, the partial data in the uplink data may be transmitted when the sum of the uplink transmission duration of the uplink data that is to be sent by the UE and the downlink transmission duration of the downlink data transmitted by the base station on the unlicensed carrier is greater than the maximum channel occupation duration of occupying the unlicensed carrier each time. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

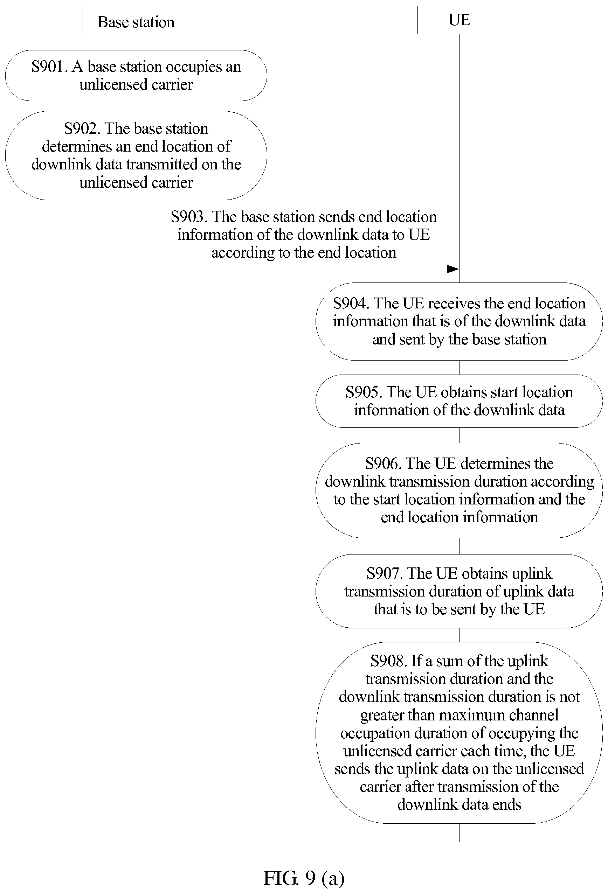

Optionally, this embodiment of the present invention further provides an uplink transmission method. Specifically, description is provided by using an example of interaction between UE and a base station. As shown in FIG. 9 (a), the method includes the following steps:
S901. A base station occupies an unlicensed carrier.
S902. The base station determines an end location of downlink data transmitted on the unlicensed carrier.
S903. The base station sends end location information of the downlink data to UE according to the end location.
S904. The UE receives the end location information that is of the downlink data and sent by the base station.
S905. The UE obtains start location information of the downlink data.
S906. The UE determines downlink transmission duration according to the start location information and the end location information.
S907. The UE obtains uplink transmission duration of uplink data that is to be sent by the UE.
S908. If a sum of the uplink transmission duration and the downlink transmission duration is not greater than maximum channel occupation duration of occupying the unlicensed carrier each time, the UE sends the uplink data on the unlicensed carrier after transmission of the downlink data ends.

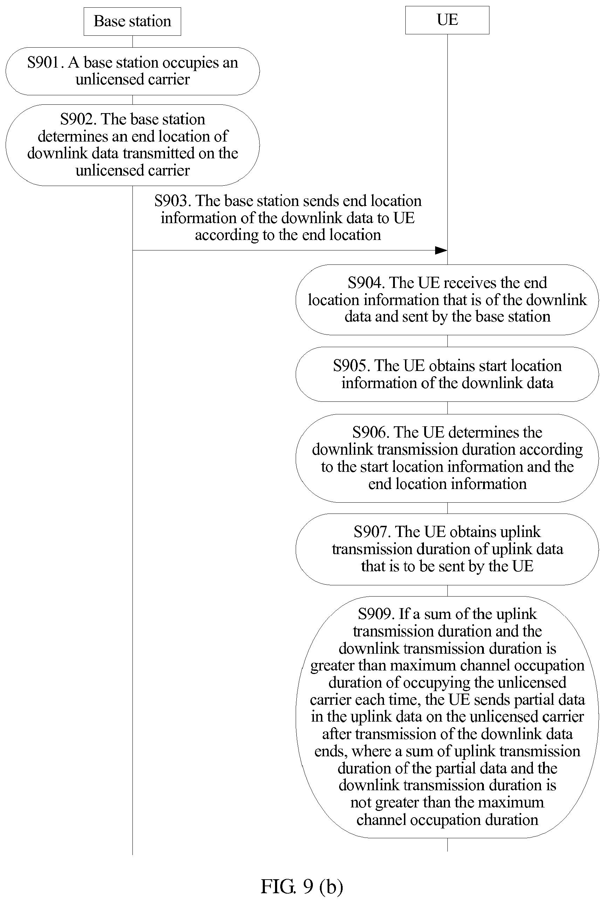

Optionally, as shown in FIG. 9 (b), after step S906 and step S907, the method may further include the following step:
S909. If a sum of the uplink transmission duration and the downlink transmission duration is greater than maximum channel occupation duration of occupying the unlicensed carrier each time, the UE sends partial data in the uplink data on the unlicensed carrier after transmission of the downlink data ends, where a sum of uplink transmission duration of the partial data and the downlink transmission duration is not greater than the maximum channel occupation duration.

Specifically, in this embodiment of the present invention, for explanation of related nouns and specific implementation of related steps, refer to the foregoing method embodiments. Details are not described herein again in this embodiment of the present invention.

Based on the uplink transmission method provided in this embodiment of the present invention, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in this embodiment of the present invention, after preempting the unlicensed carrier, the base station sends, to the UE, the end location information of the downlink data transmitted on the unlicensed carrier, so that the UE obtains the downlink transmission duration according to the end location information and the start location information that are of the downlink data. When the sum of the downlink transmission duration and the uplink transmission duration of the uplink data that is to be sent by the UE is not greater than the maximum channel occupation duration of occupying the unlicensed carrier each time, the UE sends, after the transmission of the downlink data ends, the uplink data on the unlicensed carrier on which the downlink data is transmitted. When the sum of the downlink transmission duration and the uplink transmission duration of the uplink data that is to be sent by the UE is greater than the maximum channel occupation duration of occupying the unlicensed carrier each time, the UE sends, after the transmission of the downlink data ends, the partial data in the uplink data on the unlicensed carrier on which the downlink data is transmitted. The sum of the uplink transmission duration of the partial data and the downlink transmission duration is not greater than the maximum channel occupation duration. That is, the partial data in the uplink data may be transmitted when the sum of the uplink transmission duration of the uplink data that is to be sent by the UE and the downlink transmission duration of the downlink data transmitted by the base station on the unlicensed carrier is greater than the maximum channel occupation duration of occupying the unlicensed carrier each time. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

### Embodiment 3

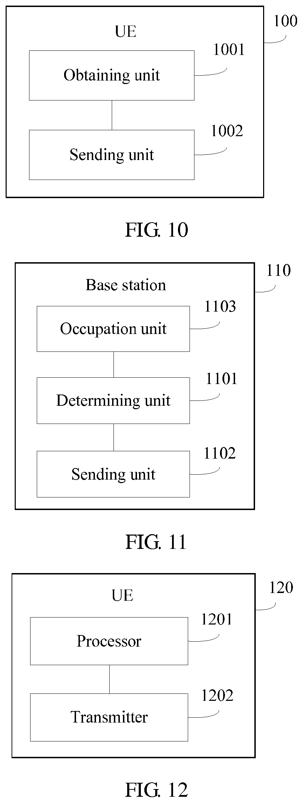

This embodiment of the present invention provides UE 100. As shown in FIG. 10, the UE 100 includes an obtaining unit 1001 and a sending unit 1002.

The obtaining unit 1001 is configured to: obtain uplink transmission duration of uplink data that is to be sent by the UE, and obtain downlink transmission duration of downlink data transmitted by a base station on an unlicensed carrier.

The sending unit 1002 is configured to: if a sum of the uplink transmission duration and the downlink transmission duration is not greater than maximum channel occupation duration of occupying the unlicensed carrier each time, send the uplink data on the unlicensed carrier after transmission of the downlink data ends.

The sending unit 1002 is further configured to: after the obtaining unit 1001 obtains the uplink transmission duration of the uplink data that is to be sent by the UE, and obtains the downlink transmission duration of the downlink data transmitted by the base station on the unlicensed carrier, if the sum of the uplink transmission duration and the downlink transmission duration is greater than the maximum channel occupation duration of occupying the unlicensed carrier each time, send partial data in the uplink data on the unlicensed carrier after the transmission of the downlink data ends, where a sum of uplink transmission duration of the partial data and the downlink transmission duration is not greater than the maximum channel occupation duration.

In a possible implementation, the obtaining unit 1001 is specifically configured to:
receive the downlink transmission duration sent by the base station.

The downlink transmission duration is sent by the base station to the UE 100 by using a PDCCH on an unlicensed carrier.

Alternatively, the downlink transmission duration is sent by the base station to the UE 100 by using a PDCCH on a licensed carrier.

In another possible implementation, the obtaining unit 1001 is specifically configured to:
receive end location information that is of the downlink data and sent by the base station;
obtain start location information of the downlink data; and
determine the downlink transmission duration according to the start location information and the end location information.

The end location information is sent by the base station to the UE 100 by using a physical downlink control channel PDCCH on an unlicensed carrier.

Alternatively, the end location information is sent by the base station to the UE 100 by using a PDCCH on a licensed carrier.

Specifically, for a method for performing uplink transmission by using the UE 100 provided in this embodiment of the present invention, refer to the foregoing method embodiments. Details are not described herein again in this embodiment of the present invention.

Based on the UE provided in this embodiment of the present invention, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in this embodiment of the present invention, the UE directly obtains the uplink transmission duration of the uplink data that is to be sent by the UE and the downlink transmission duration of the downlink data transmitted by the base station on the unlicensed carrier. When the sum of the uplink transmission duration and the downlink transmission duration is not greater than the maximum channel occupation duration of occupying the unlicensed carrier each time, the UE sends, after the transmission of the downlink data ends, the uplink data on the unlicensed carrier on which the downlink data is transmitted. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

### Example 4 (not according to the invention and present for illustration purposes only)

This example provides a base station 110. As shown in FIG. 11, the base station 110 includes an occupation unit 1103, a determining unit 1101, and a sending unit 1102.

The occupation unit 1103 is configured to occupy an unlicensed carrier.

The determining unit 1101 is configured to determine downlink transmission duration of downlink data transmitted on the unlicensed carrier.

The sending unit 1102 is configured to send the downlink transmission duration to user equipment UE.

Further, the sending unit 1102 is specifically configured to:
send the downlink transmission duration to the UE by using a PDCCH on an unlicensed carrier.

Alternatively, the sending unit 1102 is specifically configured to:
send the downlink transmission duration to the UE by using a PDCCH on a licensed carrier.

Specifically, for a method for performing uplink transmission by using the base station 110 provided in this example, refer to the foregoing method example. Details are not described herein again in this example.

Based on the base station provided in this example, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in this example, after preempting the unlicensed carrier, the base station sends, to the UE, the downlink transmission duration of the downlink data transmitted on the unlicensed carrier, so that the UE obtains the downlink transmission duration. When a sum of the downlink transmission duration and uplink transmission duration of uplink data that is to be sent by the UE is not greater than maximum channel occupation duration of occupying the unlicensed carrier each time, the UE sends, after transmission of the downlink data ends, the uplink data on the unlicensed carrier on which the downlink data is transmitted. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

### Example 4 bis (not according to the invention and present for illustration purposes only)

This example provides a base station 110. As shown in FIG. 11, the base station 110 includes an occupation unit 1103, a determining unit 1101, and a sending unit 1102.

The occupation unit 1103 is configured to occupy an unlicensed carrier.

The determining unit 1101 is configured to determine an end location of downlink data transmitted on the unlicensed carrier.

The sending unit 1102 is configured to send end location information of the downlink data to UE according to the end location.

Further, the sending unit 1102 is specifically configured to:
send the end location information of the downlink data to the UE according to the end location and by using a PDCCH on an unlicensed carrier.

Alternatively, the sending unit 1102 is specifically configured to:
send the end location information of the downlink data to the UE according to the end location and by using a PDCCH on a licensed carrier.

Specifically, for a method for performing uplink transmission by using the base station 110 provided in this example, refer to the foregoing method embodiments. Details are not described herein again in this example.

Based on the base station provided in this example, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in this example, after preempting the unlicensed carrier, the base station sends, to the UE, the end location information of the downlink data transmitted on the unlicensed carrier, so that the UE obtains downlink transmission duration according to the end location information and start location information that are of the downlink data. When a sum of the downlink transmission duration and uplink transmission duration of uplink data that is to be sent by the UE is not greater than maximum channel occupation duration of occupying the unlicensed carrier each time, the UE sends, after transmission of the downlink data ends, the uplink data on the unlicensed carrier on which the downlink data is transmitted. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

### Embodiment 4

This embodiment of the present invention provides UE 120. As shown in FIG. 12, the UE 120 includes a processor 1201 and a transmitter 1202.

The processor 1201 is configured to: obtain uplink transmission duration of uplink data that is to be sent by the UE, and obtain downlink transmission duration of downlink data transmitted by a base station on an unlicensed carrier.

The transmitter 1202 is configured to: if a sum of the uplink transmission duration and the downlink transmission duration is not greater than maximum channel occupation duration of occupying the unlicensed carrier each time, send the uplink data on the unlicensed carrier after transmission of the downlink data ends.

The transmitter 1202 is further configured to: after the processor 1201 obtains the uplink transmission duration of the uplink data that is to be sent by the UE, and obtains the downlink transmission duration of the downlink data transmitted by the base station on the unlicensed carrier, if the sum of the uplink transmission duration and the downlink transmission duration is greater than the maximum channel occupation duration of occupying the unlicensed carrier each time, send partial data in the uplink data on the unlicensed carrier after the transmission of the downlink data ends, where a sum of uplink transmission duration of the partial data and the downlink transmission duration is not greater than the maximum channel occupation duration.

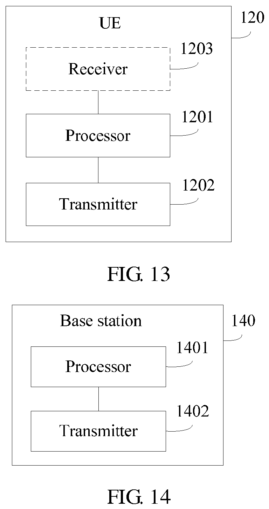

In a possible implementation, as shown in FIG. 13, the UE 120 further includes a receiver 1203. The processor 1201 is specifically configured to:
receive, by using the receiver 1203, the downlink transmission duration sent by the base station.

The downlink transmission duration is sent by the base station to the UE 120 by using a PDCCH on an unlicensed carrier.

Alternatively, the downlink transmission duration is sent by the base station to the UE 120 by using a PDCCH on a licensed carrier.

In another possible implementation, as shown in FIG. 13, the UE 120 further includes a receiver 1203.

The processor 1201 is specifically configured to:
receive, by using the receiver 1203, end location information that is of the downlink data and sent by the base station;
obtain start location information of the downlink data; and
determine the downlink transmission duration according to the start location information and the end location information.

The end location information is sent by the base station to the UE 120 by using a physical downlink control channel PDCCH on an unlicensed carrier.

Alternatively, the end location information is sent by the base station to the UE 120 by using a PDCCH on a licensed carrier.

Specifically, for a method for performing uplink transmission by using the UE 120 provided in this embodiment of the present invention, refer to the foregoing method embodiments. Details are not described herein again in this embodiment of the present invention.

Based on the UE provided in this embodiment of the present invention, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in this embodiment of the present invention, the UE directly obtains the uplink transmission duration of the uplink data that is to be sent by the UE and the downlink transmission duration of the downlink data transmitted by the base station on the unlicensed carrier. When the sum of the uplink transmission duration and the downlink transmission duration is not greater than the maximum channel occupation duration of occupying the unlicensed carrier each time, the UE sends, after the transmission of the downlink data ends, the uplink data on the unlicensed carrier on which the downlink data is transmitted. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

### Example 5 (not according to the invention and present for illustration purposes only)

This example provides a base station 140. As shown in FIG. 14, the base station 140 includes a processor 1401 and a transmitter 1402.

The processor 1401 is configured to occupy an unlicensed carrier.

The processor 1401 is further configured to determine downlink transmission duration of downlink data transmitted on the unlicensed carrier.

The transmitter 1402 is configured to send the downlink transmission duration to UE.

Further, the transmitter 1402 is specifically configured to:
send the downlink transmission duration to the UE by using a PDCCH on an unlicensed carrier.

Alternatively, the transmitter 1402 is specifically configured to:
send the downlink transmission duration to the UE by using a PDCCH on a licensed carrier.

Specifically, for a method for performing uplink transmission by using the base station 140 provided in this example, refer to the foregoing method embodiments. Details are not described herein again in this example.

Based on the base station provided in example, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in this example, after preempting the unlicensed carrier, the base station sends, to the UE, the downlink transmission duration of the downlink data transmitted on the unlicensed carrier, so that the UE obtains the downlink transmission duration. When a sum of the downlink transmission duration and uplink transmission duration of uplink data that is to be sent by the UE is not greater than maximum channel occupation duration of occupying the unlicensed carrier each time, the UE sends, after transmission of the downlink data ends, the uplink data on the unlicensed carrier on which the downlink data is transmitted. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

### Example 6 (not according to the invention and present for illustration purposes only)

This example provides a base station 140. As shown in FIG. 14, the base station 140 includes a processor 1401 and a transmitter 1402.

The processor 1401 is configured to occupy an unlicensed carrier.

The processor 1401 is further configured to determine an end location of downlink data transmitted on the unlicensed carrier.

The transmitter 1402 is configured to send end location information of the downlink data to user equipment UE according to the end location.

Further, the transmitter 1402 is specifically configured to:
send the end location information of the downlink data to the UE according to the end location and by using a physical downlink control channel PDCCH on an unlicensed carrier. Alternatively, the transmitter 1402 is specifically configured to:
send the end location information of the downlink data to the UE according to the end location and by using a PDCCH on a licensed carrier.

Specifically, for a method for performing uplink transmission by using the base station 140 provided in this example, refer to the foregoing method example. Details are not described herein again in this example.

Based on the base station provided in this example, unlike the prior art in which UE preempts a channel by using LBT; and if the channel is idle, and the UE successfully preempts the channel, sends corresponding data according to scheduling by an eNB; or abandons this transmission if the UE fails to preempt the channel, when uplink transmission is performed in this example, after preempting the unlicensed carrier, the base station sends, to the UE, the end location information of the downlink data transmitted on the unlicensed carrier, so that the UE obtains downlink transmission duration according to the end location information and start location information that are of the downlink data. When a sum of the downlink transmission duration and uplink transmission duration of uplink data that is to be sent by the UE is not greater than maximum channel occupation duration of occupying the unlicensed carrier each time, the UE sends, after transmission of the downlink data ends, the uplink data on the unlicensed carrier on which the downlink data is transmitted. Therefore, a problem that, in a solution in which the UE preempts the channel by using the LBT, when a UL grant is transmitted in a downlink, uplink transmission cannot be performed in a timely manner if the UE fails to preempt the channel, causing an uplink transmission delay and signaling waste is avoided, the uplink transmission delay is reduced, and system resources are saved.

It may be clearly understood by a person skilled in the art that, for ease and brevity of description, in the apparatus described above, division of the foregoing function modules is used as an example for description. In actual application, the foregoing functions can be allocated to different modules and implemented according to a requirement, that is, an inner structure of an apparatus is divided into different function modules to implement all or some of the functions described above. For a detailed working process of the foregoing system, apparatus, and unit, refer to a corresponding process in the foregoing method example. Details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention as defined by the appended claims, shall fall within the protection scope of the present invention. Therefore, the protection scope of the present invention shall be subject to the protection scope of the claims.

## Claims

1. An uplink transmission method, wherein the method comprises:
obtaining (S101), a user equipment, UE, uplink transmission duration of uplink data that is to be sent by the UE;
obtaining (S102), by the UE, downlink transmission duration of downlink data transmitted by a base station on an unlicensed carrier; and
sending (S103), by the UE, the uplink data on the unlicensed carrier after transmission of the downlink data ends, if the UE determines that a sum of the uplink transmission duration and the downlink transmission duration is not greater than a maximum channel occupation duration, which is a maximum duration in which a single device continuously occupies a channel;
**characterised in that**:
after the obtaining, by the UE, the uplink transmission duration of uplink data that is to be sent by the UE, and the obtaining, by the UE, the downlink transmission duration of downlink data transmitted by a base station on an unlicensed carrier, the method further comprises: sending (S104), by the UE, partial data in the uplink data on the unlicensed carrier after the transmission of the downlink data ends, if the UE determines that the sum of the uplink transmission duration and the downlink transmission duration is greater than the maximum channel occupation duration, wherein a sum of uplink transmission duration of the partial data and the downlink transmission duration is not greater than the maximum channel occupation duration.

2. The method according to claim 1, wherein the obtaining, by the UE, the downlink transmission duration of downlink data transmitted by a base station on an unlicensed carrier comprises:
receiving, by the UE, the downlink transmission duration sent by the base station.

3. The method according to claim 2, wherein the downlink transmission duration is sent by the base station to the UE by using a physical downlink control channel, PDCCH, on an unlicensed carrier; or the downlink transmission duration is sent by the base station to the UE by using a PDCCH on a licensed carrier.

4. The method according to claim 1, wherein the obtaining, by the UE, downlink transmission duration of downlink data transmitted by a base station on an unlicensed carrier comprises:
receiving, by the UE, end location information that is of the downlink data and sent by the base station;
obtaining, by the UE, start location information of the downlink data; and
determining, by the UE, the downlink transmission duration according to the start location information and the end location information.

5. The method according to claim 4, wherein the end location information is sent by the base station to the UE by using a PDCCH on an unlicensed carrier; or
the end location information is sent by the base station to the UE by using a PDCCH on a licensed carrier.

6. User equipment, UE (100), wherein the UE comprises an obtaining unit (1001) and a sending unit (1002), wherein the obtaining unit (1001) is configured to: obtain uplink transmission duration of uplink data that is to be sent by the UE, and obtain downlink transmission duration of downlink data transmitted by a base station on an unlicensed carrier; and
the sending unit (1002) is configured to: send the uplink data on the unlicensed carrier after transmission of the downlink data ends, if it determines that a sum of the uplink transmission duration and the downlink transmission duration is not greater than maximum channel occupation duration, which is a maximum duration in which a single device continuously occupies a channel;
**characterised in that**: the sending unit (1002) is further configured to: after the obtaining unit (1001) obtains the uplink transmission duration of the uplink data that is to be sent by the UE, and obtains the downlink transmission duration of the downlink data transmitted by the base station on the unlicensed carrier, send partial data in the uplink data on the unlicensed carrier after the transmission of the downlink data ends, if it determines that the sum of the uplink transmission duration and the downlink transmission duration is greater than the maximum channel occupation duration, wherein a sum of uplink transmission duration of the partial data and the downlink transmission duration is not greater than the maximum channel occupation duration.

7. The UE according to claim 6, wherein the obtaining unit is specifically configured to:
receive the downlink transmission duration sent by the base station.

8. The UE according to claim 7, wherein the obtaining unit is configured to receive the downlink transmission duration sent by the base station on a physical downlink control channel, PDCCH, on an unlicensed carrier; or the obtaining unit is configured to receive the downlink transmission duration sent by the base station on a PDCCH on a licensed carrier.

9. The UE according to claim 6, wherein the obtaining unit is specifically configured to:
receive end location information that is of the downlink data and sent by the base station;
obtain start location information of the downlink data; and
determine the downlink transmission duration according to the start location information and the end location information.

10. The UE according to claim 9, wherein the obtaining unit is configured to receive the end location information sent by the base station on a PDCCH, on an unlicensed carrier; or the obtaining unit is configured to receive the end location information sent by the base station on a PDCCH on a licensed carrier.

## Patentansprüche

1. Uplink-Übertragungsverfahren, wobei das Verfahren Folgendes umfasst:
Erhalten (S101), durch ein Benutzergerät, UE, einer Uplink-Übertragungsdauer von Uplink-Daten, die durch das UE zu senden sind;
Erhalten (S102), durch das UE, einer Downlink-Übertragungsdauer von Downlink-Daten, die durch eine Basisstation auf einem lizenzfreien Träger übertragen werden; und
Senden (S103), durch das UE, der Uplink-Daten auf dem lizenzfreien Träger, nachdem eine Übertragung der Downlink-Daten beendet ist, wenn das UE bestimmt, dass eine Summe der Uplink-Übertragungsdauer und der Downlink-Übertragungsdauer nicht größer als eine maximale Kanalbelegungsdauer ist, bei der es sich um eine maximale Dauer handelt, für die eine einzelne Vorrichtung kontinuierlich einen Kanal belegt;
**dadurch gekennzeichnet, dass**:
das Verfahren nach dem Erhalten, durch das UE, der Uplink-Übertragungsdauer von Uplink-Daten, die durch das UE zu senden sind, und dem Erhalten, durch das UE,
der Downlink-Übertragungsdauer von Downlink-Daten, die durch eine Basisstation auf einem lizenzfreien Träger übertragen werden, ferner Folgendes umfasst:
Senden (S104), durch das UE, von Teildaten in den Uplink-Daten auf dem lizenzfreien Träger, nachdem die Übertragung der Downlink-Daten beendet ist, wenn das UE bestimmt, dass die Summe der Uplink-Übertragungsdauer und der Downlink-Übertragungsdauer größer als die maximale Kanalbelegungsdauer ist, wobei eine Summe einer Uplink-Übertragungsdauer der Teildaten und der Downlink-Übertragungsdauer nicht größer als die maximale Kanalbelegungsdauer ist.

2. Verfahren nach Anspruch 1, wobei das Erhalten, durch das UE, der Downlink-Übertragungsdauer von Downlink-Daten, die durch eine Basisstation auf einem lizenzfreien Träger übertragen werden, Folgendes umfasst:
Empfangen, durch das UE, der durch die Basisstation gesendeten Downlink-Übertragungsdauer.

3. Verfahren nach Anspruch 2, wobei
die Downlink-Übertragungsdauer unter Verwendung eines physischen Downlink-Steuerkanals, PDCCH, auf einem lizenzfreien Träger durch die Basisstation an das UE gesendet wird; oder
die Downlink-Übertragungsdauer unter Verwendung eines PDCCH auf einem lizenzierten Träger durch die Basisstation an das UE gesendet wird.

4. Verfahren nach Anspruch 1, wobei das Erhalten, durch das UE, einer Downlink-Übertragungsdauer von Downlink-Daten, die durch eine Basisstation auf einem lizenzfreien Träger übertragen werden, Folgendes umfasst:
Empfangen, durch das UE, von Endortinformationen, die zu den Downlink-Daten gehören und durch die Basisstation gesendet werden;
Erhalten, durch das UE, von Startortinformationen der Downlink-Daten; und
Bestimmen, durch das UE, der Downlink-Übertragungsdauer gemäß den Startortinformationen und den Endortinformationen.

5. Verfahren nach Anspruch 4, wobei die Endortinformationen unter Verwendung eines PDCCH auf einem lizenzfreien Träger durch die Basisstation an das UE gesendet werden; oder
die Endortinformationen unter Verwendung eines PDCCH auf einem lizenzierten Träger durch die Basisstation an das UE gesendet werden.

6. Benutzergerät, UE (100), wobei das UE eine Erhalteeinheit (1001) und eine Sendeeinheit (1002) umfasst, wobei
die Erhalteeinheit (1001) ausgelegt ist zum: Erhalten einer Uplink-Übertragungsdauer von Uplink-Daten, die durch das UE zu senden sind, und Erhalten einer Downlink-Übertragungsdauer von Downlink-Daten, die durch eine Basisstation auf einem lizenzfreien Träger übertragen werden; und
die Sendeeinheit (1002) ausgelegt ist zum: Senden der Uplink-Daten auf dem lizenzfreien Träger, nachdem eine Übertragung der Downlink-Daten beendet ist, wenn sie bestimmt, dass eine Summe der Uplink-Übertragungsdauer und der Downlink-Übertragungsdauer nicht größer als eine maximale Kanalbelegungsdauer ist, bei der es sich um eine maximale Dauer handelt, für die eine einzelne Vorrichtung kontinuierlich einen Kanal belegt;
**dadurch gekennzeichnet, dass**:
die Sendeeinheit (1002) ferner ausgelegt ist zum: nachdem die Erhalteeinheit (1001) die Uplink-Übertragungsdauer der Uplink-Daten, die durch das UE zu senden sind, erhält und die Downlink-Übertragungsdauer der Downlink-Daten, die durch die Basisstation auf dem lizenzfreien Träger übertragen werden, erhält, Senden von Teildaten in den Uplink-Daten auf dem lizenzfreien Träger, nachdem die Übertragung der Downlink-Daten beendet ist, wenn sie bestimmt, dass die Summe der Uplink-Übertragungsdauer und der Downlink-Übertragungsdauer größer als die maximale Kanalbelegungsdauer ist, wobei eine Summe einer Uplink-Übertragungsdauer der Teildaten und der Downlink-Übertragungsdauer nicht größer als die maximale Kanalbelegungsdauer ist.

7. UE nach Anspruch 6, wobei die Erhalteeinheit insbesondere zu Folgendem ausgelegt ist:
Empfangen der durch die Basisstation gesendeten Downlink-Übertragungsdauer.

8. UE nach Anspruch 7, wobei die Erhalteeinheit ausgelegt ist zum Empfangen der Downlink-Übertragungsdauer, die durch die Basisstation auf einem physischen Downlink-Steuerkanal, PDCCH, auf einem lizenzfreien Träger gesendet wird; oder die Erhalteeinheit ausgelegt ist zum Empfangen der Downlink-Übertragungsdauer, die durch die Basisstation auf einem PDCCH auf einem lizenzierten Träger gesendet wird.

9. UE nach Anspruch 6, wobei die Erhalteeinheit insbesondere zu Folgendem ausgelegt ist:
Empfangen von Endortinformationen, die zu den Downlink-Daten gehören und durch die Basisstation gesendet werden;
Erhalten von Startortinformationen der Downlink-Daten; und
Bestimmen der Downlink-Übertragungsdauer gemäß den Startortinformationen und den Endortinformationen.

10. UE nach Anspruch 9, wobei die Erhalteeinheit ausgelegt ist zum Empfangen der Endortinformationen, die durch die Basisstation auf einem PDCCH auf einem lizenzfreien Träger gesendet werden; oder
die Erhalteeinheit ausgelegt ist zum Empfangen der Endortinformationen, die durch die Basisstation auf einem PDCCH auf einem lizenzierten Träger gesendet werden.

## Revendications

1. Procédé de transmission de liaison montante, dans lequel le procédé comprend :
l'obtention (S101), par un équipement utilisateur, UE, d'une durée de transmission de liaison montante de données de liaison montante qui sont destinées à être envoyées par l'UE;
l'obtention (S102), par l'UE, d'une durée de transmission de liaison descendante de données de liaison descendante transmises par une station de base sur une porteuse sans licence ; et
l'envoi (S103), par l'UE, des données de liaison montante sur la porteuse sans licence après que la transmission des données de liaison descendante se termine, si l'UE détermine qu'une somme de la durée de transmission de liaison montante et de la durée de transmission de liaison descendante n'est pas supérieure à une durée d'occupation de canal maximum, qui est une durée maximum pendant laquelle un seul dispositif occupe un canal de façon continue ;
**caractérisé en ce que** :
après l'obtention, par l'UE, de la durée de transmission de liaison montante de données de liaison montante qui sont destinées à être envoyées par l'UE, et l'obtention, par l'UE, de la durée de transmission de liaison descendante de données de liaison descendante transmises par une station de base sur une porteuse sans licence, le procédé comprend en outre :
l'envoi (S104), par l'UE, de données partielles dans les données de liaison montante sur la porteuse sans licence après que la transmission des données de liaison descendante se termine, si l'UE détermine que la somme de la durée de transmission de liaison montante et de la durée de transmission de liaison descendante est supérieure à la durée d'occupation de canal maximum, dans lequel une somme de la durée de transmission de liaison montante des données partielles et de la durée de transmission de liaison descendante n'est pas supérieure à la durée d'occupation de canal maximum.

2. Procédé selon la revendication 1, dans lequel l'obtention, par l'UE, de la durée de transmission de liaison descendante de données de liaison descendante transmises par une station de base sur une porteuse sans licence comprend :
la réception, par l'UE, de la durée de transmission de liaison descendante envoyée par la station de base.

3. Procédé selon la revendication 2, dans lequel
la durée de transmission de liaison descendante est envoyée par la station de base à l'UE en utilisant un canal de commande de liaison descendante physique, PDCCH, sur une porteuse sans licence ; ou
la durée de transmission de liaison descendante est envoyée par la station de base à l'UE en utilisant un PDCCH sur une porteuse avec licence.

4. Procédé selon la revendication 1, dans lequel l'obtention, par l'UE, de la durée de transmission de liaison descendante de données de liaison descendante transmises par une station de base sur une porteuse sans licence comprend :
la réception, par l'UE, d'informations de localisation de terminaison qui sont des données de liaison descendante et envoyées par la station de base ;
l'obtention, par l'UE, d'informations de localisation de commencement des données de liaison descendante ; et
la détermination, par l'UE, de la durée de transmission de liaison descendante selon les informations de localisation de commencement et les informations de localisation de terminaison.

5. Procédé selon la revendication 4, dans lequel les informations de localisation de terminaison sont envoyées par la station de base à l'UE en utilisant un PDCCH sur une porteuse sans licence ; ou
les informations de localisation de terminaison sont envoyées par la station de base à l'UE en utilisant un PDCCH sur une porteuse avec licence.

6. Équipement utilisateur, UE (100), dans lequel l'UE comprend une unité d'obtention (1001) et une unité d'envoi (1002), dans lequel l'unité d'obtention (1001) est configurée pour : obtenir une durée de transmission de liaison montante de données de liaison montante qui sont destinées à être envoyées par l'UE, et obtenir une durée de transmission de liaison descendante de données de liaison descendante transmises par une station de base sur une porteuse sans licence ; et
l'unité d'envoi (1002) est configurée pour : envoyer les données de liaison montante sur la porteuse sans licence après que la transmission des données de liaison descendante se termine, s'il détermine qu'une somme de la durée de transmission de liaison montante et de la durée de transmission de liaison descendante n'est pas supérieure à une durée d'occupation de canal maximum, qui est une durée maximum pendant laquelle un seul dispositif occupe un canal de façon continue ;
**caractérisé en ce que** :
l'unité d'envoi (1002) est en outre configurée pour : après que l'unité d'obtention (1001) obtient la durée de transmission de liaison montante des données de liaison montante qui sont destinées à être envoyées par l'UE, et obtient la durée de transmission de liaison descendante des données de liaison descendante transmises par la station de base sur la porteuse sans licence, envoyer des données partielles dans les données de liaison montante sur la porteuse sans licence après que la transmission des données de liaison descendante se termine, s'il détermine que la somme de la durée de transmission de liaison montante et de la durée de transmission de liaison descendante est supérieure à la durée d'occupation de canal maximum, dans lequel une somme de la durée de transmission de liaison montante des données partielles et de la durée de transmission de liaison descendante n'est pas supérieure à la durée d'occupation de canal maximum.

7. UE selon la revendication 6, dans lequel l'unité d'obtention est spécifiquement configurée pour :
recevoir la durée de transmission de liaison descendante envoyée par la station de base.

8. UE selon la revendication 7, dans lequel l'unité d'obtention est configurée pour recevoir la durée de transmission de liaison descendante envoyée par la station de base sur un canal de commande de liaison descendante physique, PDCCH, sur une porteuse sans licence ; ou
l'unité d'obtention est configurée pour recevoir la durée de transmission de liaison descendante envoyée par la station de base sur un PDCCH sur une porteuse avec licence.

9. UE selon la revendication 6, dans lequel l'unité d'obtention est spécifiquement configurée pour :
recevoir des informations de localisation de terminaison qui sont des données de liaison descendante et envoyées par la station de base ;
obtenir des informations de localisation de commencement des données de liaison descendante ; et
déterminer la durée de transmission de liaison descendante selon les informations de localisation de commencement et les informations de localisation de terminaison.

10. UE selon la revendication 9, dans lequel l'unité d'obtention est configurée pour recevoir les informations de localisation de terminaison envoyées par la station de base sur un PDCCH, sur une porteuse sans licence ; ou
l'unité d'obtention est configurée pour recevoir les informations de localisation de terminaison envoyées par la station de base sur un PDCCH sur une porteuse avec licence.
